# EUROPÄISCHE PATENTSCHRIFT

(11) **EP 0 886 866 B1**
(45) Veröffentlichungstag und Bekanntmachung des Hinweises auf die Patenterteilung: **19.09.2001**
(21) Anmeldenummer: 97908196.5
(22) Anmeldetag: 07.03.1997
(51) Int. Cl.: G21C 5/02

(54) **VERFAHREN ZUR INSTANDSETZUNG EINES BEHÄLTERS UND KERNKRAFTWERK MIT EINEM BEHÄLTER**
METHOD OF REPAIRING A VESSEL, AND NUCLEAR POWER PLANT COMPRISING SAID VESSEL
PROCEDE DE REFECTION D'UN RECIPIENT ET CENTRALE NUCLEAIRE COMPORTANT UN TEL RECIPIENT

(30) Priorität: 11.03.1996 DE 19609526
(43) Veröffentlichungstag der Anmeldung: 30.12.1998
(73) Patentinhaber: SIEMENS AKTIENGESELLSCHAFT, 80333 München (DE)
(72) Erfinder: HEINRICH, Rudolf, D-91080 Uttenreuth (DE)
(86) Internationale Anmeldenummer: EP9701158
(87) Internationale Veröffentlichungsnummer: WO9734301

(56) Entgegenhaltungen:
- DE-A- 3 544 128
- GB-A- 2 269 643
- US-A- 4 133 094
- US-A- 4 428 903
- US-A- 4 709 729
- US-A- 4 738 388
- US-A- 4 767 593
- US-A- 4 862 335

## Beschreibung

Die Erfindung betrifft ein Verfahren zur Instandsetzung eines Behälters, insbesondere eines Kernmantels, in einem Kernkraftwerk, insbesondere in einem Kernkraftwerk mit Siedewasserreaktor. Die Erfindung betrifft auch ein Kernkraftwerk, insbesondere mit Siedewasserreaktor, mit einem Behälter, insbesondere einem Kernmantel, wobei ein erstes Teilstück des Behälters auf ein zweites angrenzendes Teilstück aufgeschrumpft ist.

Ein Kernkraftwerk mit einem Behälter, bei dem zwei Teilstücke aufeinander aufgeschrumpft sind, ist bekannt.

Aus der US 4,738,388 ist zu entnehmen, daß ein Teilstück eines Behälters, nämlich der Deckel, auf den eigentlichen Behälter aufgeschrumpft wird. Aus der US 4,767,593 ist ein Druckbehälter bekannt, der aus mehreren Hüllen aufgebaut ist, wobei diese Hüllen auf die darunterliegende Hülle aufgeschrumpft werden. Die US 4,428,903 zeigt ein Verfahren, mit dem eine Hülse an einem Brennstab befestigt wird. Da dieses Verfahren unter Wasser durchgeführt wird, kann es sich nicht um ein Aufschrumpfverfahren handeln. Die Teile werden vielmehr hydraulisch aneinandergepreßt.

An einem Behälter in einem Kernkraftwerk, insbesondere an einem Kernmantel eines Siedewasserreaktors, können nach sehr langer Betriebszeit Schäden auftreten, die eine Instandsetzung erforderlich machen. Ein Austausch des gesamten Kernmantels wäre jedoch unwirtschaftlich, da solche Schäden meist nur an einer Stelle am Kernmantel auftreten.

Der Erfindung liegt daher die Aufgabe zugrunde, ein Verfahren zur Instandsetzung eines Behälters, insbesondere eines Kernmantels, anzugeben, das einen aufgetretenen Schaden zuverlässig beseitigt und trotzdem mit möglichst geringem Aufwand und wirtschaftlich durchführbar ist. Es soll auch ein instandgesetztes Kernkraftwerk angegeben werden.

Die erste Aufgabe wird gemäß der Erfindung dadurch gelöst, daß aus dem Behälter ein eine Achse des Behälters umgreifendes, beschädigtes Teilstück herausgetrennt wird, und daß ein neues die entstandene Lücke überdeckendes Teilstück eingefügt und auf mindestens ein angrenzendes Teilstück des Behälters aufgeschrumpft wird.

Das Aufschrumpfen eines Bauteils auf ein anderes Bauteil ist unter dem Stichwort "Querpreßsitz" aus Hütte, Des Ingenieurs Taschenbuch, Maschinenbau Teil A, Verlag von Wilhelm Ernst & Sohn, Berlin 1954, S. 105 und 106, bekannt.

Mit dem Verfahren nach der Erfindung wird der Vorteil erzielt, daß unter Verwendung des als solchen bekannten Aufschrumpfens eine Lücke im Behälter, die durch das Heraustrennen eines beschädigten Teilstückes entstanden ist, zuverlässig und stabil durch ein neues Teilstück wieder verschlossen werden kann. Es muß also vorteilhafterweise nicht der gesamte Behälter ausgetauscht werden. Mit dem Verfahren nach der Erfindung ist es möglich, nur die beschädigten Teilstücke zu ersetzen.

Damit das neue Teilstück durch Aufschrumpfen mit einem oder zwei angrenzenden Teilstücken verbunden werden kann, ist es erforderlich, daß das herauszutrennende Teilstück eine beliebige Achse des Behälters umgreift. Die Form des Teilstückes kann dabei den Erfordernissen angepaßt sein. Diese können vorsehen, daß das herauszutrennende Teilstück möglichst klein ist und trotzdem alle beschädigten Bereiche umfaßt. Es kommt darauf an, daß das neue Teilstück die Achse des Behälters umgreift, weil dann das als solche bekannte Aufschrumpfen zu einer festen Verbindung führt.

Beispielsweise weist der Behälter einen kreisförmigen Querschnitt auf und das beschädigte, sowie das neue Teilstück des Behälters sind ringförmig ausgebildet. Dieser Ring wird dann zum Aufschrumpfen erwärmt, im erwärmten Zustand über den Behälter bis zu seiner späteren Position geschoben und dort abgekühlt. Der Ring überdeckt dann die Lücke im Behälter.

Beispielsweise füllt das neue Teilstück die Lücke aus und weist mindestens eine Anformung auf, die das angrenzende Teilstück von außen übergreift. Damit wird der Vorteil erzielt, daß die Innenoberfläche des Behälters nach der Instandsetzung weitgehend eben ist. Die Anformung bildet einen Teil des neuen Teilstückes, der nach dem Aufschrumpfen an ein angrenzendes Teilstück angepreßt ist.

Beispielsweise greift die Anformung in eine Nut in der äußeren Oberfläche des angrenzenden Teilstücks ein. Dadurch wird das neue Teilstück nach dem Aufschrumpfen besonders stabil positioniert.

Das neue und/oder das angrenzende Teilstück werden beispielsweise mechanisch bearbeitet, um eine formschlüssige Verbindung dieser Teilstücke zu ermöglichen.

Zum Beispiel wird das neue Teilstück vor dem Aufschrumpfen durch Heizmatten aufgeheizt. Es sind jedoch auch andere Heizmethoden möglich.

Beispielsweise wird das neue Teilstück vor dem Aufschrumpfen auf 100° C bis 200° C, insbesondere auf 150° C, aufgeheizt.

Die zweite Aufgabe wird gemäß der Erfindung dadurch gelöst, daß das erste Teilstück eine Lücke überdeckt, die nach dem Heraustrennen eines eine Achse des Behälters umgreifenden beschädigten Teilstücks entstanden ist.

Damit wird der Vorteil erzielt, daß der Behälter, der zuvor beschädigt war, in einfacher, wirtschaftlicher Weise zuverlässig und stabil repariert bzw. instandgesetzt ist.

Mit dem Verfahren zur Instandsetzung eines Behälters und dem Kernkraftwerk nach der Erfindung ist erstmals ein Austausch eines Teilstückes eines Behälters möglich, weil eine zuverlässige und formschlüssige Verbindung zwischen dem neuen, eingefügten Teilstück und angrenzenden Teilstücken gegeben ist. Nach dem Erkalten des neuen Teilstückes entspricht der Lastabtrag einer Schraubverbindung, die mindestens 120 Schrauben erfordert hätte. Vorteilhafterweise sind keine Gewindebohrungen notwendig, die am Kernmantel eines Siedewasserreaktors nur mit großem Aufwand angebracht werden könnten.

Ein Behälter, insbesondere ein Kernmantel eines Siedewasserreaktors, kann mit dem Verfahren nach der Erfindung in wirtschaftlicher Weise zuverlässig instandgesetzt werden.

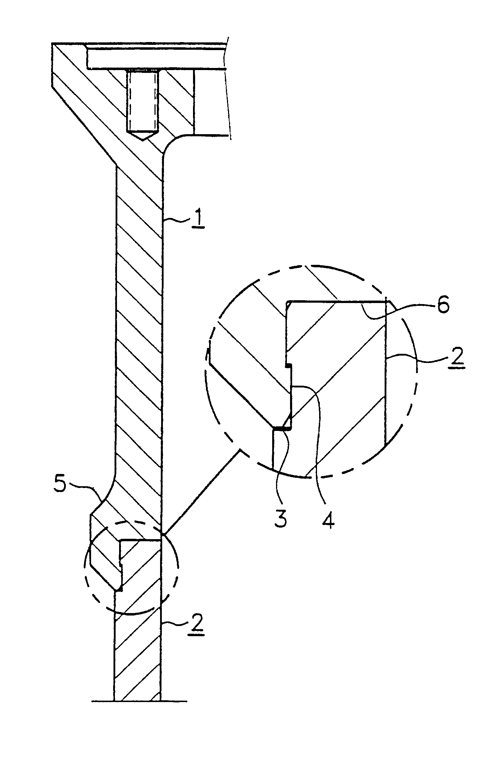

Das Verfahren und das Kernkraftwerk nach der Erfindung werden anhand der Zeichnung näher erläutert:
Die Zeichnung zeigt in einem Längsschnitt ein neues Teilstück 1 eines Behälters, das auf ein angrenzendes Teilstück 2 aufgeschrumpft ist. Die beiden Teilstücke 1, 2 haben ringförmige Querschnitte. Im Bereich der Schrumpfverbindung ist das angrenzende Teilstück 2 zur Aufnahme des neuen Teilstückes 1 mechanisch bearbeitet worden. In der vergrößerten Detailzeichnung ist zu erkennen, daß in die Außenoberfläche des angrenzenden Teilstückes 2 eine Stufe 3 und eine Nut 4 eingearbeitet worden sind.
Das neue Teilstück 1 weist eine Anformung 5 auf, die sich auf der Stufe 3 abstützt und in die Nut 4 eingreift. Im wesentlichen ist jedoch das neue Teilstück 1 auf einer Stirnfläche 6 des angrenzenden Teilstückes 2 abgestützt, die dadurch entstanden ist, daß ein beschädigtes Teilstück abgetrennt worden ist.
Beim Aufschrumpfen wird das neue Teilstück erwärmt, wodurch es weiter wird. Nach der Positionierung wird das neue Teilstück 1 abgekühlt, wodurch es wieder enger wird und dadurch fest an das angrenzende Teilstück 2 angepreßt wird. Es greift dabei auch in die Nut 4 ein. Es ist eine stabile Verbindung gewährleistet.
Im gezeigten Ausführungsbeispiel ist das neue Teilstück 1 der obere Teil eines Kernmantels und weist nur eine Schrumpfverbindung auf. Das neue Teilstück 1 kann jedoch auch zwischen zwei angrenzenden Teilstücken 2 eingefügt sein. Es sind dann zwei Schrumpfverbindungen notwendig.

## Patentansprüche

1. Verfahren zur Instandsetzung eines Behälters, insbesondere eines Kernmantels, in einem Kernkraftwerk, insbesondere in einem Kernkraftwerk mit Siedewasserreaktor,
**dadurch gekennzeichnet, daß** aus dem Behälter ein eine Achse des Behälters umgreifendes, beschädigtes Teilstück herausgetrennt wird, und daß ein neues, die entstandene Lücke überdeckendes Teilstück (1) eingefügt und auf mindestens ein angrenzendes Teilstück (2) des Behälters aufgeschrumpft wird.

2. Verfahren nach Anspruch 1,
**dadurch gekennzeichnet, daß** der Behälter einen kreisförmigen Querschnitt aufweist, und daß das beschädigte und das neue Teilstück (1) des Behälters ringförmig ausgebildet sind.

3. Verfahren nach einem der Ansprüche 1 oder 2,
**dadurch gekennzeichnet, daß** das neue Teilstück (1) die Lücke ausfüllt und mindestens eine Anformung (5) aufweist, die das angrenzende Teilstück (2) von außen übergreift.

4. Verfahren nach Anspruch 3,
**dadurch gekennzeichnet, daß** die Anformung (5) in eine Nut (4) in der äußeren Oberfläche des angrenzenden Teilstückes (2) eingreift.

5. Verfahren nach einem der Ansprüche 1 bis 4,
**dadurch gekennzeichnet, daß** das neue Teilstück (1) und/oder das angrenzende Teilstück (2) mechanisch bearbeitet werden, um eine formschlüssige Verbindung dieser Teilstücke (1, 2) zu ermöglichen.

6. Verfahren nach einem der Ansprüche 1 bis 5, **dadurch gekennzeichnet, daß** das neue Teilstück (1) vor dem Aufschrumpfen durch Heizmatten aufgeheizt wird.

7. Verfahren nach einem der Ansprüche 1 bis 6,
**dadurch gekennzeichnet, daß** das neue Teilstück (1) vor dem Aufschrumpfen auf 100° C bis 200° C aufgeheizt wird.

8. Kernkraftwerk, insbesondere mit Siedewasserreaktor, mit einem Behälter, insbesondere einem Kernmantel, wobei ein erstes Teilstück (1) des Behälters auf ein zweites angrenzendes Teilstück (2) aufgeschrumpft ist,
**dadurch gekennzeichnet, daß** das erste Teilstück (1) eine Lücke überdeckt, die nach dem Heraustrennen eines eine Achse des Behälters umgreifenden, beschädigten Teilstücks entstanden ist.

## Claims

1. Method for repairing a container, in particular a core shroud, in a nuclear power station, in particular in a nuclear power station having a boiling-water reactor, **characterized in that** a damaged portion surrounding an axis of the container is detached from the container, and in that a new portion (1) covering the resulting gap is inserted and is shrunk onto at least one adjoining portion (2) of the container.

2. Method according to Claim 1, **characterized in that** the container has a circular cross section, and in that the damaged portion and the new portion (1) of the container are of ring-shaped design.

3. Method according to one of Claims 1 or 2, **characterized in that** the new portion (1) fills the gap and has at least one shaped piece (5) which engages over the adjoining portion (2) from outside.

4. Method according to Claim 3, **characterized in that** the shaped piece (5) engages in a groove (4) in the outer surface of the adjoining portion (2).

5. Method according to one of Claims 1 to 4, **characterized in that** the new portion (1) and/or the adjoining portion (2) are machined mechanically, in order to allow a positive connection of these portions (1, 2).

6. Method according to one of Claims 1 to 5, **characterized in that** the new portion (1) is heated by means of heating blankets, before being shrunk on.

7. Method according to one of Claims 1 to 6, **characterized in that** the new portion (1), before being shrunk on, is heated to 100°C to 200°C.

8. Nuclear power station, in particular having a boiling-water reactor, with a container, in particular a core shroud, where a first portion (1) of the container is shrunk onto a second adjoining portion (2), **characterized in that** the first portion (1) covers a gap which is produced after detaching a damaged portion surrounding an axis of the container.

## Revendications

1. Procédé de remise en état d'une cuve, notamment d'une enveloppe de coeur d'une centrale nucléaire, notamment d'une centrale nucléaire à réacteur à eau bouillante,
**caractérisé en ce qu'**il consiste à sortir de la cuve une pièce endommagée et entourant un axe de la cuve et à insérer une nouvelle pièce (1) recouvrant le vide créé et à la rétreindre sur au moins une pièce (2) adjacente de la cuve.

2. Procédé suivant la revendication 1, **caractérisé en ce que** la cuve a une section transversale circulaire et en ce que la pièce endommagée et la nouvelle pièce (1) de la cuve sont annulaires.

3. Procédé suivant l'une des revendications 1 ou 2, **caractérisé en ce que** la nouvelle pièce (1) remplit le vide et a au moins une partie (5) conformée qui recouvre de l'extérieur la pièce (2) adjacente.

4. Procédé suivant la revendication 3, **caractérisé en ce que** la partie (5) conformée pénètre dans une gorge (4) ménagée dans la surface extérieure de la pièce (2) adjacente.

5. Procédé suivant l'une des revendications 1 à 4, **caractérisé en ce que** la nouvelle pièce (1) et/ou la pièce (2) adjacente sont usinées mécaniquement pour permettre une liaison par complémentarité de formes de ces pièces (1, 2).

6. Procédé suivant l'une des revendications 1 à 5, **caractérisé en ce que** la nouvelle pièce (1) est chauffée par des couvertures chauffantes avant le rétreint.

7. Procédé suivant l'une des revendications 1 à 6, **caractérisé en ce que** la nouvelle pièce (1) est portée à une température de 100°C à 200°C avant le rétreint.

8. Centrale nucléaire, notamment à réacteur à eau bouillante, comportant une cuve, notamment une enveloppe de coeur, une première pièce (1) de la cuve étant rétreinte sur une deuxième pièce (2) adjacente, **caractérisée en ce que** la première pièce (1) recouvre un vide qui s'est créé après qu'une pièce endommagée et entourant un axe de la cuve en a été sortie.
